**Europäisches Patentamt**

**European Patent Office**

**Office européen des brevets**

(19)

(11) Veröffentlichungsnummer: **0 050 280**
**B1**

(12)

# EUROPÄISCHE PATENTSCHRIFT

(45) Veröffentlichungstag der Patentschrift:
**05.11.86**

(51) Int. Cl.⁴: **B 60 T 8/34**

(21) Anmeldenummer: **81108113.2**

(22) Anmeldetag: **09.10.81**

(54) **Blockiergeschützter Bremskraftregelkreis.**

(30) Priorität: **20.10.80 DE 3039512**

(43) Veröffentlichungstag der Anmeldung:
**28.04.82 Patentblatt 82/17**

(45) Bekanntmachung des Hinweises auf die Patenterteilung:
**05.11.86 Patentblatt 86/45**

(84) Benannte Vertragsstaaten:
**AT BE CH DE FR GB IT LI NL SE**

(56) Entgegenhaltungen:
**FR-A-2 387 825**
**GB-A-2 002 474**
**US-A-3 637 264**
**US-A-3 674 320**

(73) Patentinhaber: **KNORR- BREMSE AG, Moosacher Strasse 80 Postfach 401060, D-8000 München 40 (DE)**

(72) Erfinder: **Saumweber, Eckart, Dr., Mühlstrasse 15, D-8035 Gauting (DE)**
Erfinder: **Beckmann, Heinrich, Scharnhorststrasse 14, D-4950 Minden (DE)**
Erfinder: **Ottersbach, Jens, Marienstrasse 7, D-4950 Minden (DE)**

**Beschreibung**

Die Erfindung bezieht sich auf einen blockiergeschützten Bremskraftregelkreis, insbesondere für Schienenfahrzeuge, mit mindestens einem mit einem überwachten Rad verbundenen Radgenerator, dessen Signale einer digitalen Auswerteschaltung zugeführt werden, die in Abhängigkeit von den Ausgangssignalen des Radgenerators bei Überschreiten vorgegebener Schwellwerte mittels Bremsdruckbefehlen mindestens ein Bremsbetätigungsorgan so ansteuert, daß der Bremsdruck bei Überschreiten eines vorgegebenen Schwellwertes schnell abgesenkt wird und bei Rücküberschreiten dieses Schwellwertes durch impulsförmiges Ansteuern des Bremsbetätigungsorganes langsam abgesenkt wird, so daß abwechselnd Phasen mit schneller Bremsdruckänderung und Bremsdruckhaltephasen auftreten, wobei die langsame Bremsdruckänderung mit einer Bremsdruckhaltephase beginnt.

Ein derartiger Bremskraftregelkreis ist aus der US-A 3 637 264 bekannt. Bei diesem bekannten Bremskraftregelkreis geht es darum, steile und flache Bremsdruckverläufe zu erhalten, was durch gepulstes Offnen von Einlaß- oder Auslaßventilen erfolgt. Es ist zu erkennen, daß ein schneller Druckabbau erfolgt, wenn ein negativer, zweiter Schwellwert $-b_2$ unterschritten wurde und daß von schnellem Druckabbau auf gepulsten, langsamen Druckabbau umgeschaltet wird, wenn dieser Schwellwert $-b_2$ rücküberschritten wird. Weiterhin läßt sich erkennen, daß der langsame Druckabbau mit einer Haltephase beginnt. Hieraus ergibt sich, daß bei diesem Bremskraftregelkreis selbst während der vergleichsweise kurzen Haltephase jederzeit ein Rückumschalten auf schnellen Druckkabbau möglich ist, sofern innerhalb dieser Druckhaltephase der Schwellwert $-b_2$ wieder unterschritten wird. Dies hat den Nachteil, daß Haftwertsprünge, Schwingungen träger Massen, Digitalisierungsfehler usw. zu einem unruhigen Regelverhalten führen, wobei auch der Fall auftreten kann, daß erneut auf schnelle Druckabsenkung umgeschaltet wird, obwohl sich das Rad bereits erholt hat.

Weiterhin sind ähnliche Bremskraftregelkreise allgemein bekannt und beispielsweise unter der Typenbezeichnung GR 5 von der Anmelderin im Handel erhältlich. Hierbei werden in der Auswerteschaltung aus den drehzahlproportional kodierten Ausgangssignalen des Radgenerators verschiedene Signale abgeleitet, wie zum Beispiel ein der Fahrzeuggeschwindigkeit nachgebildetes Bezugssignal (sogenannte fiktive Linie), Radbeschleunigungs- bzw. Radverzögerungssignale, Differenzsignale zwischen Radgeschwindigkeitssignalen und dem Bezugssignal, usw.. Diese einzelnen Signale werden mit einem oder mehreren Bezugswerten verglichen, wobei in Abhängigkeit von diesem Vergleich bestimmte, den Bremsdruck beeinflussende Maßnahmen ergriffen werden.

Als Radgenerator wird heute üblicherweise ein sogenannter Impulsgeber verwendet, bei dem ein synchron mit dem Rad drehendes Zahnrad magnetisch oder optisch abgetastet wird, wobei das Ausgangssignal des Radgenerators impulsförmig ist und eine Frequenz aufweist, die der Raddrehzahl proportional ist. Dieses Signal wird üblicherweise - gegebenenfalls unter Frequenzvervielfachung - während fester Taktzeiten in einen Zähler eingezählt, so daß dann am Ende der Taktzeit der Inhalt des Zählers der Radgeschwindigkeit während der Zeit entspricht. Wird beispielsweise ein Binärzähler verwendet, so liegt der Meßwert entsprechend binär kodiert vor.

Aus aufeinanderfolgenden Meßwerten werden dann in bekannter Weise die oben genannten, anderen Signale abgeleitet. Bei dieser Art der Messung treten jedoch zwangsläufig verschiedene Fehler auf. Zum einen handelt es sich um den unvermeidlichen Digitalisierungsfehler. Weiterhin können Anderungen der Meßgröße, d.h. also der Radgeschwindigkeit, während des Meßintervalles nicht vollständig erfaßt werden, da der Zähler eine Art Mittelwertbildung vornimmt. Bei linerarer Anderung der Meßgröße während des Meßintervalles entspricht der Inhalt des Zählers am Ende des Meßintervalles genau dem arithmetischen Mittelwert der Meßgröße während des Meßintervalles. Hieraus folgt, daß die als Meßwert erhaltene Größe der Radgeschwindigkeit und auch die hieraus abgeleiteten Größen den tatsächlichen Werten der Radbewegung zeitlich nacheilen. Hieraus folgt wiederum, daß auch Anderungen des Radverhaltens aufgrund vorausgegangener Bremsbefehle bzw. vorausgegangener Bremsdruckbeeinflussung später bemerkt bzw. erfaßt werden als sie tatsächlich am Rad auftreten.

Eine aufgrund der erfaßten Anderung des Radverhaltens eingeleitete Bremsdruckmaßnahme muß dann zur Erzielung eines möglichst kurzen Bremsweges relativ stark sein, was zur Folge hat, daß die Regelung relativ unruhig arbeitet, d.h., daß der Bremskraftregelkreis häufig anspricht bzw. den jeweiligen Bremsdruck häufig ändert.

Aufgabe der vorliegenden Erfindung ist es daher, den blockiergeschützten Bremskraftregelkreis der eingangs genannten Art dahingehend zu verbessern, daß ein ruhigeres Regelverhalten erzielt wird. Selbstverständlich sollen die Vorteile des bekannten Bremskraftregelkreises, wie kurze Bremswege und sicheres Verhindern eines Blockierens der Räder, beibehalten werden.

Diese Aufgabe wird erfindungsgemäß dadurch gelöst, daß die im Anschluß an eine schnelle Druckabsenkung auftretende Haltephase eine konstante Dauer hat, die doppelt so lang ist, wie die Bremsdruckänderungsphase, und daß bei Ablauf der vorgegebenen Zeitdauer die digitale Auswerteschaltung überprüft, ob eine Blockiergefahr vorliegt oder nicht, worauf entsprechende Maßnahmen (schnelles oder langsames Ändern des Bremsdruckes oder Konstanthalten desselben) ergriffen werden.

Insgesamt wird hierdurch folgendes erreicht:

Wird beispielsweise eine drohende Blockiergefahr dadurch erkannt, daß die zeitliche Ableitung der Radgeschwindigkeit, d.h. die Radbeschleunigung, einen vorgegebenen, negativen Schwellwert unterschreitet (in streng mathematischem Sinne) und hierauf eine schnelle Bremsdruckabsenkung befohlen, so kann dann mit hoher Wahrscheinlichkeit darauf geschlossen werden, daß die Bremsdruckabsenkung erfolgreich war, d.h., daß die Blockiergefahr vorbei ist, wenn dieser Schwellwert rücküberschritten wird. In diesem Falle wird dann von "schneller Bremsdruckabsenkung" auf "langsame Bremsdruckabsenkung", beginnend mit einer Haltephase, umgeschaltet. Während dieser Haltephase, die vorzugsweise einer vorgegebenen Anzahl von Taktzeiten der digitalen Auswerteschaltung entspricht, wird dann ein Meßwert für das tatsächliche Verhalten des Rades erhalten, und die Auswerteschaltung kann mit Sicherheit erkennen, ob die rasche Bremsdruckabsenkung ausreichend war. Entsprechendes gilt natürlich auch für ein rasches Anheben des Bremsdruckes beim Wiederhochlaufen des Rades. Nach dieser einen Phase der langsamen Bremsdruckänderung wird in der Regel ein weiteres Kriterium erfüllt sein, welches eine entsprechende Beeinflussung des Bremsdruckes zur Folge hat. Vorzugsweise setzt sich die Phase der langsamen Bremsdruckänderung aus einer Bremsdruckhaltephase mit einer Dauer von zwei Taktzeiten und einer Bremsdruckänderungsphase mit einer Dauer von einer Taktzeit der digitalen Auswerteschaltung zusammen.

Vorteilhafte Ausgestaltungen und Weiterbildungen der Erfindung sind den Unteransprüchen zu entnehmen.

Im Folgenden wird die Erfindung anhand eines Ausführungsbeispiels im Zusammenhang mit den Figuren ausführlicher erläutert.

Es zeigt:

Figur 1 einen zeitlichen Verlauf der Winkelbeschleunigung eines Rades bei einem Bremszyklus;

Figur 2 eine schematische Darstellung von Bremsdruckbefehlen in Abhängigkeit verschiedener Auslösekriterien; und

Figur 3 ein schematisches Blockschaltbild des Bremskraftregelkreises nach der Erfindung.

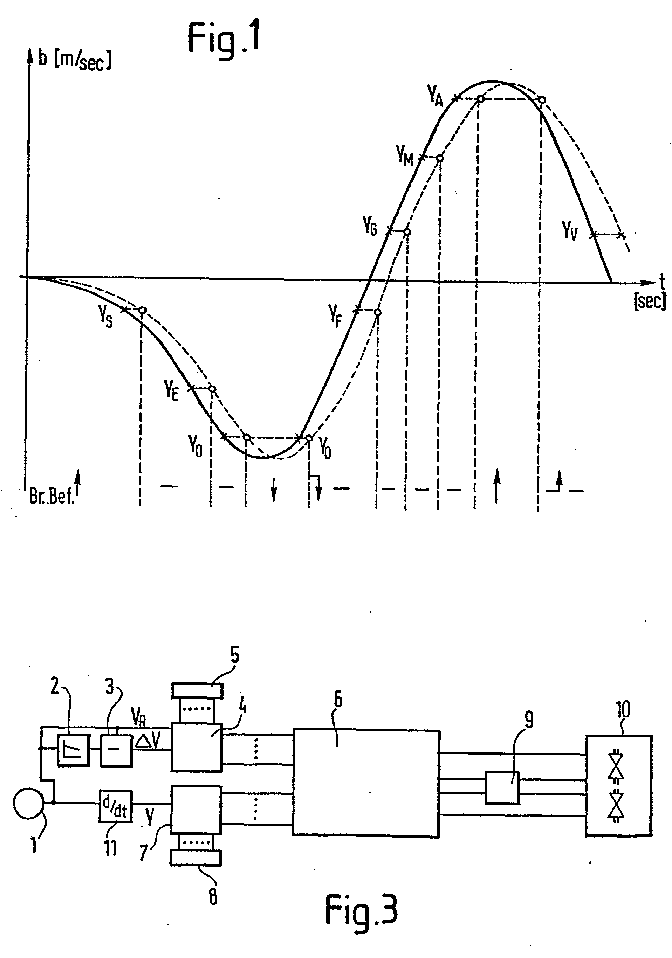

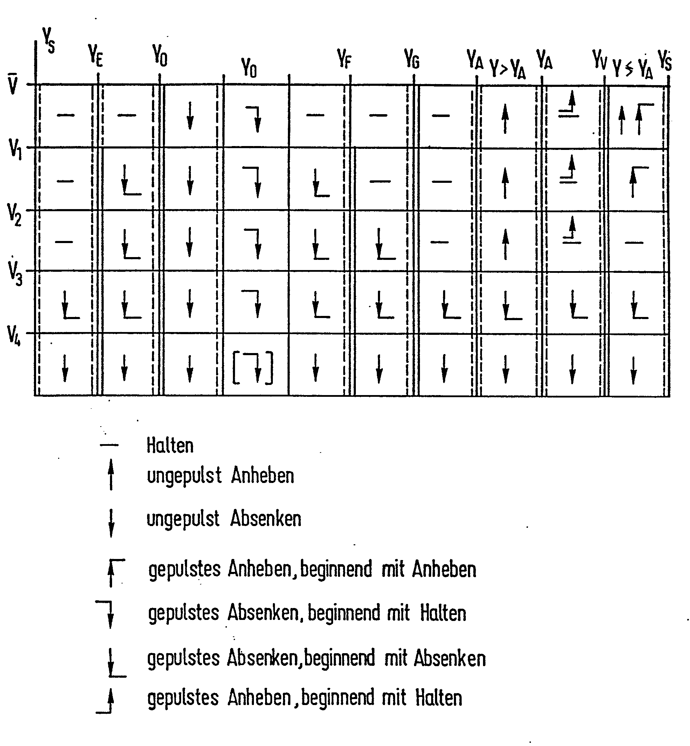

Figur 1 zeigt den zeitlichen Verlauf der Winkelbeschleunigung eines Rades bei einem Bremsvorgang. Die stark ausgezogene Linie zeigt die tatsächlich auftretende Winkelbeschleunigung des Rades. Die Zeitintervalle zwischen den einzelnen, dünnen, senkrechten Linien entsprechen einer Taktzeit der digitalen Auswerteschaltung. Durch die oben beschriebenen Fehlereinflüsse liegt jeweils am Ende eines Meßintervalles nicht der tatsächliche Wert der Winkelbeschleunigung vor, sondern etwa der Mittelwert des Winkelbeschleunigungsverlaufes des vorhergehenden Taktzeitintervalles, was durch die Kreuzchen bezeichnet ist. Eine diese Kreuzchen verbindende, gestrichelte Linie zeigt somit schematisch den Winkelbeschleunigungsverlauf des Rades, wie er der Auswerteschaltung zu entnehmen ist. Diese Kurve ist gegenüber dem tatsächlichen Beschleunigungsverlauf phasenverschoben, wobei der Betrag der Phasenverschiebung von der Steilheit der Änderung des tatsächlichen Verlaufes abhängt. Mit den Größen $Y_S$, $Y_E$, $Y_O$, $Y_F$, $Y_G$, $Y_M$ und $Y_A$ sind die einzelnen Schwellwerte der Winkelbeschleunigung bezeichnet, bei denen entsprechende Bremsbefehle ausgelöst werden. Über die gestrichelten, waagerechten und senkrechten Linien ist angedeutet, um welche Zeitdauer zu spät (bezogen auf das tatsächliche Radverhalten) die einzelnen Bremsdruckmaßnahmen eingeleitet werden, bzw. um welche Zeitdauer zu spät das Ergebnis der durchgeführten Bremsdruckmaßnahme von der Auswerteschaltung erfaßt wird. Ganz unten in Fig. 1 sind beispielhaft die einzelnen Bremsbefehle dargestellt, die in Abhängigkeit von dem Erfassen der einzelnen Kriterien ausgelöst werden. Im einzelnen sind diese Befehle in Figur 2 dargestellt.

Figur 2 zeigt die entsprechenden Bremsbefehle in Abhängigkeit von bestimmten Auslösekriterien. Die einzelnen Zeilen entsprechen vorgegebenen Drehzahlbereichen des überwachten Rades, wobei die Größe V die eingangs genannte, fiktive Zuggeschwindigkeit bezeichnet. Es sind also bestimmte "Geschwindigkeitskorridore" für die Radumdrehungsgeschwindigkeit vorgegeben, d.h. die Bereiche $V - V_1$, $V_1 - V_2$, $V_2 - V_3$, $V_3 - V_4$ und $V_4$-"Null", d.h. Stillstand des Rades. Die einzelnen Spalten bezeichnen die einzelnen Beschleunigungsbereiche, die durch die in Fig. 1 dargestellten Schwellwerte festgelegt sind.

Jeder Zustand eines Rades hinsichtlich Radumdrehungsgeschwindigkeit und Winkelbeschleunigung kann somit jeweils genau einem Feld in Fig. 2 zugeordnet werden. In den einzelnen Feldern sind die entsprechenden Bremsbefehle symbolisch dargestellt, wobei die einzelnen Symbole in der Legende der Figur 2 erläutert sind. Seitlich an den einzelnen Feldern sind gestrichelte oder durchgezogene Linien zu erkennen. Eine gestrichelte Linie bedeutet hierbei, daß die Auswerteschaltung zu dem entsprechenden Befehl des der gestrichelten Linie benachbarten Feldes umschalten kann, sofern die entsprechenden Kriterien erfüllt sind. Die durchgezogene Linie bedeutet, daß die Auswerteschaltung nicht zu dem entsprechend benachbarten Feld umschalten kann.

Zum besseren Verständnis der Figur 2 sei beispielhaft ein möglicher Bremsverlauf erläutert. Es werde hierbei die zweite Zeile betrachtet, bei der die Radgeschwindigkeit in dem Bereich zwischen $V_1$ und $V_2$ liegt. Nach einer anfänglichen Bremsdruckerhöhung beginnt das Rad zu schlüpfen, so daß seine Geschwindigkeit kleiner ist als die fiktive Fahrzeuggeschwindigkeit und in dem Geschwindigkeitskorridor $V_1$ - $V_2$ liegt. Sobald nun die Radbeschleunigung den negativen Schwellwert $Y_S$ (vgl. Fig. 1) erreicht hat, wird der zu diesem Zeitpunkt vorhandene Bremsdruck gehalten. Nimmt die Radbeschleunigung weiter ab und erreicht den (negativen) Schwellwert $Y_E$, so wird der Bremsdruck impulsförmig und somit langsam abgesenkt, wobei Bremdruckhaltephasen und Bremsdruckabsenkphasen abwechselnd aufeinanderfolgen und wobei mit einer Bremsdruckabsenkphase begonnen wird. Nimmt die Radbeschleunigung noch weiter ab und erreicht den (negativen) Schwellwert $Y_0$, so wird der Bremsdruck rasch, d.h. ungepulst, abgesenkt. Wird darauf folgend der Schwellwert $Y_0$ rücküberschritten (d.h. in Fig. 1 von unten kommend), so wird für eine vorgegebene Zeitdauer auf gepulstes Absenken, beginnend mit Halten, umgeschaltet. Nach Ablauf dieser Zeitdauer wird der Bremsdruck weiter gepulst abgesenkt, wobei zur formalen Ünterscheidung des dann folgenden Befehles dieser Befehl mit "gepulstes Absenken, beginnend mit Absenken" bezeichnet ist. Überschreitet daraufhin die Radverzögerung von unten kommend den nächsten Schwellwert $Y_F$, so wird auf Druckhalten umgeschaltet. Dieser Befehl bleibt auch in dem darauf folgenden Bereich von $Y_G$ - $Y_A$ aufrechterhalten. Überschreitet die Radbeschleunigung den Schwellwert $Y_A$, so wird auf ungepulstes, d.h. schnelles Druckanheben umgeschaltet. Bei Rücküberschreiten des Schwellwertes $Y_A$, d.h. von oben nach unten in Figur 1, wird für eine vorbestimmte Zeitdauer auf "gepulstes Anheben, beginnend mit Halten" umgeschaltet. Nach Ablauf dieser Zeitdauer wird auf Druckhalten umgeschaltet.

Erreicht dann das Rad den Schwellwert $Y_V$, so wird wieder auf gepulstes Druckanheben umschaltet.

Es sei darauf hingewiesen, daß nicht alle Felder einer Zeile - wie oben beschrieben - in der Praxis durchlaufen werden. Da jeweils nur nach einer Taktzeit der Auswerteschaltung ein neuer Befehl erscheinen kann, kann es vorkommen, daß bei starken Änderungen der Radbeschleunigung während des vorhergehenden Meßintervalles mehrere Bereiche (d.h. Spalten in Fig. 2) durchlaufen wurden, so daß einzelne Felder in einer Zeile übersprungen werden.

Weiterhin kann sich auch die Radumdrehungsgeschwindigkeit während eines Bremszyklus ändern, so daß die Logik in eine andere Zeile des Diagrammes der Fig. 2 springt. Natürlich kann die Änderung auch dergestalt sein, daß gleichzeitig Spalte und Zeile gewechselt wird und so diagonale Sprünge in dem Diagramm der Fig. 2 stattfinden.

Eine Besonderheit stellt noch der Fall dar, bei dem die Radgeschwindigkeit in dem Bereich zwischen $V_4$ und Null liegt. Der dort bei Rücküberschreiten des Schwellwertes $Y_0$ in Klammern gezeigte Befehl kann auch durch den Befehl "ungepulstes Absenken" ersetzt werden, da bei derart geringen Radgeschwindigkeiten die Blockiergefahr zu groß ist,als daß eine Haltephase zugelassen werden könnte.

Figur 3 zeigt ein Blockschaltbild des erfindungsgemäßen Bremskraftregelkreises. Ein Radgenerator 1 gibt drehzahlproportional kodierte Impulse ab, die einem Schaltkreis 2 zugeführt werden, in welchem in bekannter Weise, beispielsweise mittels Kondensatorentladung, ein der tatsächlichen Zuggeschwindigkeit nachgebildetes Signal (sog. fiktive Linie) erzeugt wird. Dieses Signal wird einem Eingang eines Differenzschaltkreises 3 zugeführt, dessen anderem Eingang das Ausgangssignal des Radgenerators 1 zugeführt wird. Am Ausgang des Schaltkreises 3 erscheint somit ein Signal, das der Differenz aus tatsächlicher Radgeschwindigkeit und fiktiver Fahrzeuggeschwindigkeit proportional ist. Dieses Signal wird allgemein mit $\Delta$-V-Signal bezeichnet. Dieses Signal wird zusammen mit dem Ausgangssignal des Radgenerators 1 einem Komparator 4 zugeführt, wo es mit vorgegebenen Schwellwerten aus einem Bezugswertgeber verglichen wird. Die eingestellten Schwellwerte des Bezugswertgebers 5 entsprechend den in Fig. 2 behandelten Geschwindigkeitssignalen $V_1$ - $V_4$ und dem Wert "Null".

An den entsprechenden Ausgängen des Komparators 4 erscheinen dann Signale, die die einzelnen "Geschwindigkeitskorridore" bezeichnen. Diese Signale werden einer Auswerteschaltung 6 zugeführt.

Weiterhin wird das Ausgangssignal des Radgenerators 1 einem Differenzierer 11 zugeführt, an dessen Ausgang ein der Radbeschleunigung, bzw. der Winkelbeschleunigung des Rades proportionales Signal Y vorzeichenrichtig erscheint. Dieses Signal wird einem weiteren Komparator 7 zugeführt, wo es mit Schwellwerten aus einem weiteren Bezugswertgeber 8 verglichen wird. Die eingestellten Schwellwerte des Bezugwertgebers 8 entsprechen den in Fig. 1 und 2 dargestellten Schwellwerten $Y_S$, $Y_G$, $Y_0$, $Y_F$, $Y_G$, $Y_M$, $Y_Y$ und $Y_V$. An den entsprechenden Ausgängen des Komparators 7 erscheinen dann Signale, die anzeigen, in welchem Beschleunigungsbereich (Spalten in Fig. 2) sich das überwachte Rad befindet. Diese Signale werden ebenfalls der Auswerteschaltung 6 zugeführt. Die Auswerteschaltung 6 führt die in Fig. 2 dargestellten logischen Verknüpfungen durch und gibt an ihren Ausgängen Bremsbefehlsignale entsprechend Fig. 2 ab, die je nach Befehl über einen Impulsgenerator 9 oder direkt Bremsbetätigungsorganen 10 zugeführt werden. Die Bremsbetätigungsorganen 10 enthalten

üblicherweise elektrisch betätigbare Ventile, meistens in Form eines Einlaßventiles und eines Auslaßventiles.

Die Arbeitsweise der Auswerteschaltung 6 wurde im Zusammenhang mit Fig. 2 so ausführlich beschrieben, daß eine schaltungstechnische Realisierung, insbesondere unter Verwendung eines Mikroprozessors, dem Fachmanne ohne weitere Erläuterung möglich ist.

Sämtliche aus der Beschreibung, den Ansprüchen und der Zeichnung hervorgehenden Merkmale und Vorteile der Erfindung, einschließlich konstruktiver Einzelheiten, können sowohl für sich als auch in beliebiger Kombination erfindungswesentlich sein.

**Patentansprüche**

1) Blockiergeschützter Bremskraftregelkreis, insbesondere für Schienenfahrzeuge, mit mindestens einem, mit einem überwachten Rad verbundenen Radgenerator (1), dessen Signale einer digitalen Auswerteschaltung (2-8,11) zugeführt werden, die in Abhängigkeit von den Ausgangssignalen des Radgenerators beim Überschreiten vorgegebener Schwellwerte mittels Bremsdruckbefehlen mindestens ein · Bremsbetätigungsorgan (10) so ansteuert, daß der Bremsdruck bei Überschreiten eins vorgegebenen Schwellwertes ($Y_o$) schnell abgesenkt wird und bei Rücküberschreiten dieses Schwellwertes ($Y_o$) durch impulsförmiges (9) Ansteuern des Bremsbetätigungsorganes langsam abgesenkt wird, so daß abwechselnd Phasen mit schneller Bremsdruckänderung und Bremsdruckhaltephasen auftreten, wobei die langsame Bremsdruckänderung mit einer Bremsdruckhaltephase beginnt, dadurch gekennzeichnet, daß die im Anschluß an eine schnelle Druckabsenkung auftretende Haltephase eine konstante Dauer hat, die doppelt so lang ist, wie die Bremsdruckänderungsphase und daß bei Ablauf der vorgegebenen Zeitdauer, die digitale Auswerteschaltung (6) überprüft, ob eine Blockiergefahr vorliegt oder nicht, worauf entsprechende Maßnahmen (schnelles oder langsames Ändern des Bremsdruckes oder Konstanthalten desselben) ergriffen werden.

2) Blockiergeschützter Bremskraftregelkreis· nach Anspruch 1, dadurch gekennzeichnet, daß die vorgegebene Zeitdauer einer vorgegebenen Anzahl von Taktzeiten der digitalen Auswerteschaltung (6) entspricht.

3) Blockiergeschützter Bremskraftregelkreis· nach Anspruch 1, dadurch gekennzeichnet, daß die langsame Bremsdruckänderung in Anschluß an eine schnelle Bremsdruckänderung während eines Regelzyklus nur im Anschluß an eine schnelle Bremsdruckabsenkung vorgenommen wird.

**Claims**

1. Anti-lock brake pressure automatic control system, in particular for rail vehicles, having at least one wheel generator (1) connected to a monitored wheel, the signals of which are fed to a digital evaluation circuit (2-8,11) which, in dependence on the output signals of the wheel generator, controls at least one brake actuation element (10) by means of brake pressure commands when predetermined threshold values are exceeded, so that when a predetermined threshold value ($Y_o$) is exceeded, the brake pressure is reduced quickly, and when this threshold value ($Y_o$) is again exceeded, by impulse (9) control of the brake actuation element it is reduced slowly so that phases with a fast brake pressure change and brake pressure holding phases occur alternately, whereby the slow brake pressure change begins with a brake pressure holding phase, characterised in that the holding phase occurring in connection with a fast pressure reduction has a constant duration which is twice as long as the brake pressure change phase, and in that when a predetermined period of time has expired, the digital evaulation circuit (6) checks whether there is a danger of locking or not, whereupon appropriate steps are taken (fast or slow changing of the brake pressure or keeping it constant).

2. Anti-lock brake pressure automatic control system according to claim 1, characterised in that the predetermined period of time corresponds to a predetermined number of clock times of the digital evaluation circuit (6).

3. Anti-lock brake pressure automatic control system according to claim 1, characterised in that the slow brake pressure change following a fast brake pressure change is carried out during a control cycle only subsequent to a fast brake pressure reduction.

**Revendications**

1. Circuit de régulation de la force de freinage à protection contre le blocage, en particulier pour des véhicules sur rails, avec au moins une génératrice de roue (1) reliée à la roue à contrôler, et dont les signaux sont appliqués à un circuit d'évaluation numérique (2-8, 11) qui, en fonction des signaux de sortie de la génératrice de roue commande, lors du dépassement de valeurs de seuil prédéterminées, et à l'aide d'instructions de pression de freinage, attaque un organe de commande du frein (10) de façon telle que la pression de freinage soit rapidement abaissée lors d'un dépassement d'une valeur de seuil prédéterminée ($Y_o$) et soit, au passage en retour parcette valeur de seuil ($Y_o$), lentement abaissée par une commande impulsionnelle de l'organe de commande du frein de façon qu'apparaissent des phases alternées à modification rapide du changement de la pression de freinage et des phases de maintien de la pression de freinage, la modification lente de la modification de la pression du freinage démarrant avec une phase de maintien de la pression de freinage, caractérisé par le fait que la phase de maintien qui apparaît à la suite d'une chute rapide de la pression, a une durée constante qui est le double de celle de la phase de modification de la pression de freinage, et qu'après écoulement d'une durée prédéterminée, le circuit d'évaluation numérique (6) procédé à une verification pour déterminer si l'on est en présence ou non d'un danger de blocage, après quoi sont prises des mesures correspondantes (modification rapide ou lente de la pression de freinage ou maintien à une valeur constante de celle-ci).

2. Circuit de régulation de la force de freinage à protection contre le blocage selon la revendication 1, caractérisé par le fait que la durée prédéterminée correspond à un nombre prédéterminé de durée de cadence du circuit d'évaluation numérique (6).

3. Circuit de régulation de la force de freinage à protection contre le blocage selon la revendication 1, caractérisé par le fait que la modification lente de la pression de freinage est opérée à la suite d'une modification rapide de la pression de freinage, pendant un cycle de régulation, uniquement à la suite d'un abaissement rapide de la pression de freinage.

0 050 280

Fig.1

Fig.3

Legend:

— Halten

↑ ungepulst Anheben

↓ ungepulst Absenken

$\ulcorner$ gepulstes Anheben, beginnend mit Anheben

$\urcorner$ gepulstes Absenken, beginnend mit Halten

$\llcorner$ gepulstes Absenken, beginnend mit Absenken

$\lrcorner$ gepulstes Anheben, beginnend mit Halten